# EUROPEAN PATENT APPLICATION

(11) **EP 4 667 533 A1**
(43) Date of publication of application: **24.12.2025**
(21) Application number: 25181660.9
(22) Date of filing: 10.06.2025
(51) Int. Cl.: C08L 83/04

(54) **ADDITION-CURABLE SILICONE RESIN COMPOSITION**

(30) Priority: 18.06.2024 JP 2024098324
(71) Applicant: SHIN-ETSU CHEMICAL CO., LTD., Tokyo 1000005 (JP)
(72) Inventor: Yamazaki, Tatsuya, Annaka-shi, Gunma (JP)
(74) Representative: Schicker, Silvia

(57) **Abstract**

The present invention is an addition-curable silicone resin composition including (A) a linear organopolysiloxane having two or more alkenyl groups each having 2 to 8 carbon atoms in one molecule; (B-1) a branched organohydrogenpolysiloxane represented by the following general formula (1); (B-2) a linear organohydrogenpolysiloxane represented by the following general formula (2); (C) a flaky silver powder that is surface-treated with a branched organohydrogenpolysiloxane represented by (HR³₂SiO_{1/2})ₐ(R³₃SiO_{1/2})_{b}(SiO_{4/2})_{c}, wherein the branched organohydrogenpolysiloxane having two or more hydrogen atoms each directly bonded to a silicon atom in one molecule, being liquid at 25°C, and having a weight average molecular weight Mw of 1,500 to 6,000; and (D) an addition-reaction catalyst. The present invention provides an addition-curable silicone resin composition which is excellent in curability and excellent in resin strength and elongation of a cured product, and which has both heat conductivity and electric conductivity.

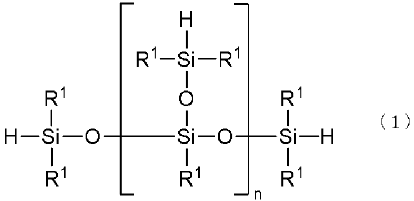

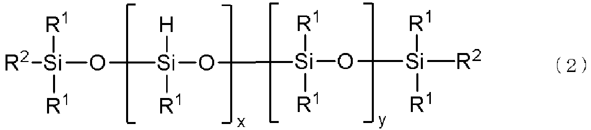

## Description

### TECHNICAL FIELD

The present invention relates to an addition-curable silicone resin composition.

### BACKGROUND ART

Conventionally, silver powders have been used as fillers of various polymers because silver powders have high heat conductivity and high electric conductivity. Examples of application of the silver powders to silicone resins are shown below. Besides a silver powder that is surface-treated with fatty acid, a silver powder that is surface-treated with a specific organic silicon compound is known. The electric conductivity of the silicone cured product using the silver powder is described, but flexibility and heat conductivity of the obtained cured product are not described (Patent Document 1).

Also, a method in which a basic compound is allowed to act on a flaky silver powder that is surface-treated with fatty acid is well known. In this method, a bare flaky aggregated silver powder in which fatty acid is removed from the surface of the particle is obtained. However, the binder resin mentioned as a silver paste composition is thermal radical curable methyl vinyl polysiloxane, which is affected by oxygen inhibition in the atmosphere. Therefore, heating and pressurizing are required for production of a cured product, which means that the method is not versatile. Also, application to an addition-curable silicone resin as a binder resin is not mentioned (Patent Document 2).

Also, a method in which mixed powder in which a silver powder and a fine powder silica are mixed together in advance and are then allowed to stand for 30 days at room temperature is sieved to remove aggregated powder is known. However, this method is not preferred from the viewpoint of atom economy, and there is no description on the state of the surface of the silver powder as a raw material (Patent Document 3).

A silver paste in which an ultraviolet-curable addition-curable silicone resin is used as a binder resin is known. This resin gives a flexible cured product, but there is a concern about the application range because there is no description on heat conductivity and also there is no description on the state of the surface or the form of the silver powder (Patent Document 4).

As another method for surface-treating a silver powder, a method in which tetraethoxysilane is allowed to act on a spherical reduced silver powder to subject the powder to SiO₂ gel coating is known. However, there is no example of application to a polymer binder, and there is only a description on the behavior of the silver powder alone at the time of sintering at high temperature (Patent Document 5).

As described above, with conventional addition-curable silicone resin compositions containing silver powder, it has been difficult to provide an addition-curable silicone resin composition which has excellent curability and has strength and elongation of the cured product, and which has both heat conductivity and electric conductivity.

### CITATION LIST

### PATENT LITERATURE

Patent Document 1: JP H07-109501 A
Patent Document 2: JP 2004-149707 A
Patent Document 3: JP 2000-336273 A
Patent Document 4: JP 2020-083928 A
Patent Document 5: JP 2008-262916 A

### SUMMARY OF INVENTION

### TECHNICAL PROBLEM

The present invention has been made in order to solve the problem, and an object of the present invention is to provide an addition-curable silicone resin composition which is excellent in curability and excellent in resin strength and elongation of the cured product, and which has both heat conductivity and electric conductivity.

### SOLUTION TO PROBLEM

To achieve the object, the present invention provides an addition-curable silicone resin composition comprising:
(A) a linear organopolysiloxane having two or more alkenyl groups each having 2 to 8 carbon atoms in one molecule;
(B-1) a branched organohydrogenpolysiloxane represented by the following general formula (1): 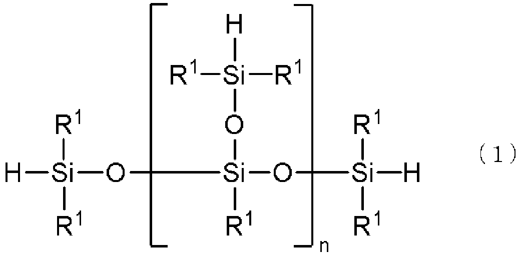 wherein R¹s are each independently an alkyl group having 1 to 12 carbon atoms or an aryl group having 6 to 12 carbon atoms; and "n" is 1 or 2;
(B-2) a linear organohydrogenpolysiloxane represented by the following general formula (2): 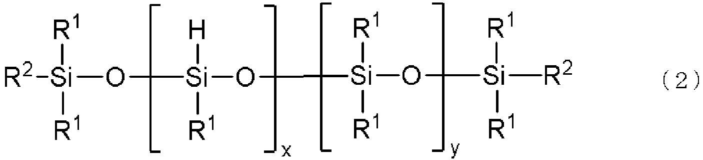 wherein R¹s are each as defined above; R²s are each independently a hydrogen atom, an alkyl group having 1 to 12 carbon atoms, or an aryl group having 6 to 12 carbon atoms; 0<x; and 0≤y;
(C) a flaky silver powder that is surface-treated with a branched organohydrogenpolysiloxane represented by the following general formula (3), wherein the branched organohydrogenpolysiloxane having two or more hydrogen atoms each directly bonded to a silicon atom in one molecule, being liquid at 25°C, and having a weight average molecular weight Mw of 1,500 to 6,000:

   (HR³₂SiO_{1/2})ₐ(R³₃SiO_{1/2})_{b}(SiO_{4/2})_{c} ... (3)

   wherein R³s are each independently an alkyl group having 1 to 12 carbon atoms; and 0<a<0.6, 0≤b<0.4, and 0<c<0.6, provided that a+b+c=1; and
(D) an addition-reaction catalyst.

With such an addition-curable silicone resin composition, an addition-curable silicone resin composition which is excellent in curability and excellent in resin strength and elongation of the cured product, and has both heat conductivity and electric conductivity may be obtained.

In the present invention, the linear organopolysiloxane as the component (A) is preferably an alkenyl group-containing linear organopolysiloxane represented by the following general formula (4): 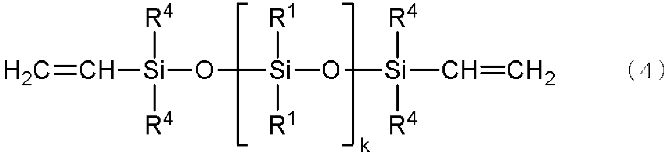 wherein R⁴s are each independently an alkenyl group having 2 to 8 carbon atoms or an alkyl group having 1 to 12 carbon atoms; R¹s are each as defined above; a methyl group accounts for 80 mol% or more in total R¹s; and "k" is an integer satisfying k>0, and is a number which allows a kinematic viscosity of the linear organopolysiloxane at 25°C as measured by a method described in JIS Z 8803:2011 to be 10 to 1,000,000 mm²/s.

For the addition-curable silicone resin composition of the present invention, such a component (A) is preferred.

In the present invention, in the component (C), a viscosity of the branched organohydrogenpolysiloxane of the component (C) at 25°C as measured by a method described in JIS K 7117-1:1999 is preferably 10 Pa·s or more.

Such a branched organohydrogenpolysiloxane of the component (C) is preferred, because handleability at the time of pulverizing into a flaky silver powder is satisfactory.

In the present invention, the branched organohydrogenpolysiloxane of the component (C) is preferably a cohydrolysis condensate of a HR³₂SiO_{1/2} unit source, a R³₃SiO_{1/2} unit source, and a SiO_{4/2} unit source, and the SiO_{4/2} unit source is preferably a partial hydrolysis condensate of tetraalkoxysilane.

With such a branched organohydrogenpolysiloxane of the component (C), a branched organohydrogenpolysiloxane having a large weight average molecular weight in which the content of volatile hydrosilyl group-containing low molecular weight siloxane is small may be obtained.

### ADVANTAGEOUS EFFECTS OF INVENTION

As described above, according to the addition-curable silicone resin composition of the present invention, an addition-curable silicone resin composition which is, even if the amount of a catalyst is small, excellent in curability and excellent in resin strength and elongation of the cured product, and which has both heat conductivity and electric conductivity may be given, and, therefore, the addition-curable silicone resin composition of the present invention is very useful.

### DESCRIPTION OF EMBODIMENTS

As described above, it has been demanded to develop an addition-curable silicone resin composition which is excellent in curability and excellent in resin strength and elongation of the cured product, and which has both heat conductivity and electric conductivity.

The present inventors have conducted intensive studies on the object, and, as a result, they have found the fact that an addition-curable silicone resin composition may be more excellent in curability and excellent in resin strength and elongation of the cured product than conventional products, and may have both heat conductivity and electric conductivity, when a specific organopolysiloxane and a silver powder that is surface-treated with a specific organohydrogenpolysiloxane are used in combination, thereby completing the present invention.

That is, the present invention is an addition-curable silicone resin composition comprising:
(A) a linear organopolysiloxane having two or more alkenyl groups each having 2 to 8 carbon atoms in one molecule;
(B-1) a branched organohydrogenpolysiloxane represented by the following general formula (1): 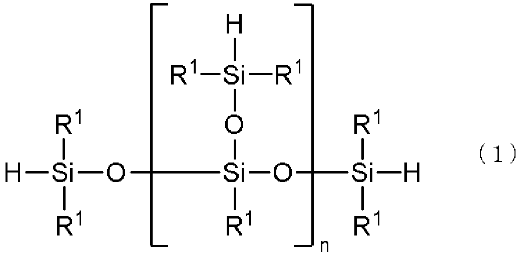 wherein R¹s are each independently an alkyl group having 1 to 12 carbon atoms or an aryl group having 6 to 12 carbon atoms; and "n" is 1 or 2;
(B-2) a linear organohydrogenpolysiloxane represented by the following general formula (2): 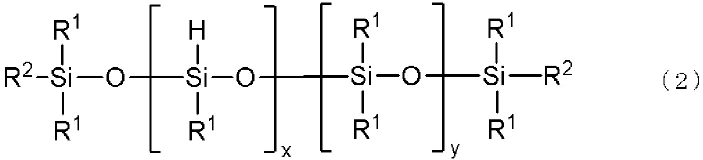 wherein R¹s are each as defined above; R²s are each independently a hydrogen atom, an alkyl group having 1 to 12 carbon atoms, or an aryl group having 6 to 12 carbon atoms; 0<x; and 0≤y;
(C) a flaky silver powder that is surface-treated with a branched organohydrogenpolysiloxane represented by the following general formula (3), wherein the branched organohydrogenpolysiloxane having two or more hydrogen atoms each directly bonded to a silicon atom in one molecule, being liquid at 25°C, and having a weight average molecular weight Mw of 1,500 to 6,000:

   (HR³₂SiO_{1/2})ₐ(R³₃SiO_{1/2})_{b}(SiO_{4/2})_{c} ... (3)

   wherein R³s are each independently an alkyl group having 1 to 12 carbon atoms; and 0<a<0.6, 0≤b<0.4, and 0<c<0.6, provided that a+b+c=1; and
(D) an addition-reaction catalyst.

The present invention will hereinafter be described in detail. However, the present invention is not limited thereto.

### <Addition-curable silicone resin composition>

The addition-curable silicone resin composition of the present invention contains (A) a linear organopolysiloxane, (B-1) a branched organohydrogenpolysiloxane, (B-2) a linear organohydrogenpolysiloxane, (C) a flaky silver powder, and (D) an addition-reaction catalyst. Each component will hereinafter be described.

### <(A) linear organopolysiloxane>

The component (A) is a linear organopolysiloxane having two or more alkenyl groups each having 2 to 8 carbon atoms in one molecule, and is a main agent of the present invention. Further, the component (A) is preferably an alkenyl group-containing linear organopolysiloxane represented by the following general formula (4).

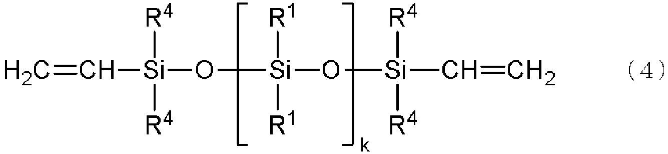

In the formula, R⁴s are each independently an alkenyl group having 2 to 8 carbon atoms or an alkyl group having 1 to 12 carbon atoms; R¹s are each as defined above; a methyl group accounts for 80 mol% or more in total R¹s; and "k" is an integer satisfying k>0, and is a number which allows a kinematic viscosity of the linear organopolysiloxane at 25°C as measured by a method described in JIS Z 8803:2011 to be 10 to 1,000,000 mm²/s.

In the general formula (4), specific examples of the alkenyl group of R⁴ having 2 to 8 carbon atoms, particularly 2 to 6 carbon atoms, include a vinyl group; an allyl group; an isopropenyl group; a butenyl group; a pentenyl group; a hexenyl group; and a cyclohexenyl group, and a vinyl group is particularly preferred considering reactivity.

In the general formula (4), specific examples of the alkyl group of R⁴ having 1 to 12 carbon atoms, particularly preferably 1 to 10 carbon atoms, include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group. As the alkyl group of R⁴, a methyl group, an ethyl group, a propyl group, an isopropyl group, and the like are preferred, and a methyl group is particularly preferred considering heat resistance under high temperature conditions of the silicone cured product produced from the obtained addition-curable silicone resin composition.

In the general formula (4), specific examples of the aryl group of R¹ having 6 to 12 carbon atoms include a phenyl group and a naphthyl group, and a phenyl group is particularly preferred. When a linear organopolysiloxane having a predetermined amount of the phenyl group introduced therein is used, the storage elastic modulus of the low temperature region of the cured product obtained from the addition-curable silicone resin composition of the present invention may be suppressed to a low level.

In the general formula (4), specific examples of the alkyl group of R¹ having 1 to 12 carbon atoms include the same alkyl groups of the R⁴. Also, a methyl group accounts for 80 mol% or more in total R¹s.

The kinematic viscosity at 25°C of the component (A) as measured by a method using a Cannon-Fenske viscometer described in JIS Z 8803: 2011 is preferably in the range of 10 to 1,000,000 mm²/s, and more preferably in the range of 100 to 100,000 mm²/s.

In the general formula (4), "k" is an integer satisfying k>0, and is a number which allows the kinematic viscosity to be within the above range.

Specific examples of the component (A) include the followings:

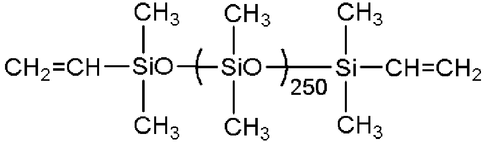

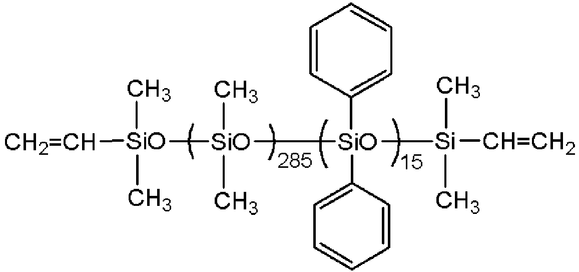

### <(B-1) branched organohydrogenpolysiloxane>

The component (B-1) is a branched organohydrogenpolysiloxane represented by the following general formula (1).

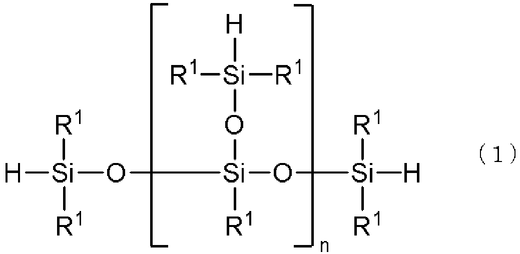

In the formula, R¹s are each independently an alkyl group having 1 to 12 carbon atoms or an aryl group having 6 to 12 carbon atoms; and "n" is 1 or 2.

In the general formula (1), specific examples of the alkyl group of R¹ having 1 to 12 carbon atoms, particularly preferably 1 to 10 carbon atoms, include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group. As the alkyl group of R¹, a methyl group, an ethyl group, a propyl group, an isopropyl group, and the like are preferred, and a methyl group is particularly preferred considering heat resistance under high temperature conditions of the silicone cured product produced from the obtained addition-curable silicone resin composition.

In the general formula (1), specific examples of the aryl group of R¹ having 6 to 12 carbon atoms include a phenyl group and a naphthyl group, and a phenyl group is particularly preferred. When a branched organohydrogenpolysiloxane having a predetermined amount of the phenyl group introduced therein is used, the storage elastic modulus of the low temperature region of the cured product obtained from the addition-curable silicone resin composition of the present invention may be suppressed to a low level.

In the general formula (1), "n" is 1 or 2, and is preferably 2.

Such a branched organohydrogenpolysiloxane contains a large amount of a siloxane unit having a hydrogen atom bonded to a silicon atom in an M unit, and, therefore, curability of the addition-curable silicone resin composition of the present invention containing this and elongation of the cured product to be obtained may be enhanced.

Specific examples of the branched organohydrogenpolysiloxane as the component (B-1) include the followings.

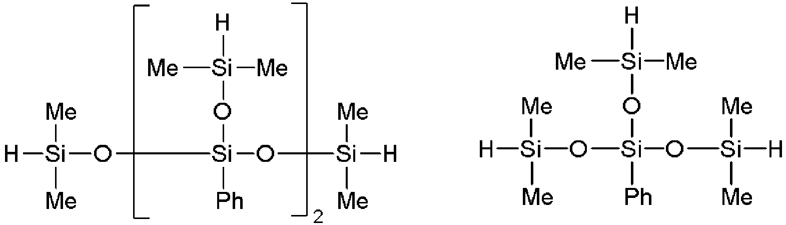

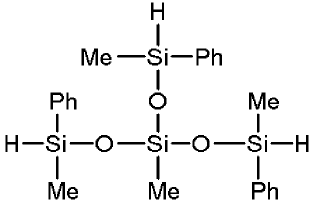

In the formula, "Me" represents a methyl group, and "Ph" represents a phenyl group.

### <(B-2) linear organohydrogenpolysiloxane>

The component (B-2) is a linear organohydrogenpolysiloxane represented by the following general formula (2).

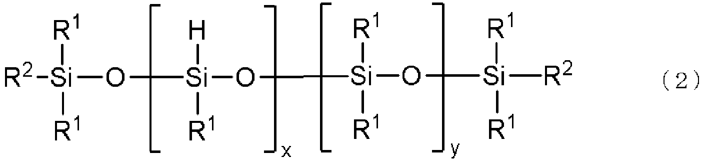

In the formula, R¹s are each as defined above; R²s are each independently a hydrogen atom, an alkyl group having 1 to 12 carbon atoms, or an aryl group having 6 to 12 carbon atoms; 0<x; and 0≤y.

In the general formula (2), specific examples of the alkyl group of R² having 1 to 12 carbon atoms, particularly preferably 1 to 10 carbon atoms, include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group. As the alkyl group of R², a methyl group, an ethyl group, a propyl group, an isopropyl group, and the like are preferred, and a methyl group is particularly preferred considering heat resistance under high temperature conditions of the silicone cured product produced from the obtained addition-curable silicone resin composition.

In the general formula (2), specific examples of the aryl group of R² having 6 to 12 carbon atoms include a phenyl group and a naphthyl group, and a phenyl group is particularly preferred. When a linear organohydrogenpolysiloxane having a predetermined amount of the phenyl group introduced therein is used, the storage elastic modulus of the low temperature region of the cured product obtained from the addition-curable silicone resin composition of the present invention may be suppressed to a low level.

In the general formula (2), 0<x and 0≤y, and preferably 5<x≤100 and 0≤y≤50.

In the general formula (2), R¹s are each as defined for R¹s in the general formula (1).

When the addition-curable silicone resin composition of the present invention contains such a linear organohydrogenpolysiloxane having a hydrogen atom directly bonded to a silicon atom on the side chain of the molecular chain, hardness and strength of the cured product to be obtained may be enhanced.

Specific examples of the linear organohydrogenpolysiloxane as the component (B-2) include the followings.

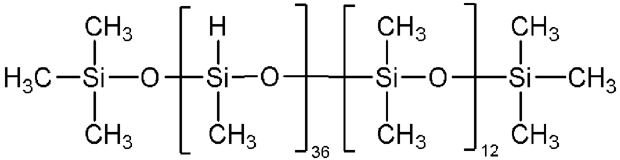

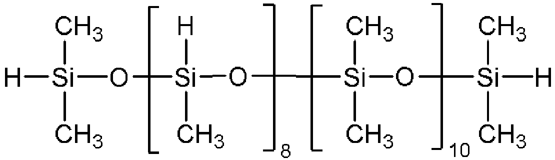

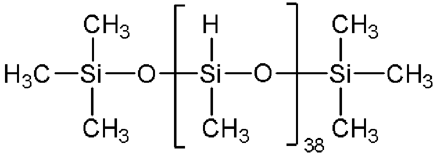

With regard to the blending amount of the components (B-1) and (B-2), the total amount of the hydrogen atom bonded to a silicon atom in the total amount of the components (B-1) and (B-2) with respect to 1 mol in total of the alkenyl group bonded to a silicon atom in the whole addition-curable silicone resin composition is preferably in the range of 1.0 to 3.0 mol, and particularly preferably in the range of 1.2 to 2.0 mol. When the total amount of the hydrogen atom bonded to a silicon atom in the total amount of the components (B-1) and (B-2) is within the above range, curing reaction smoothly proceeds whereby a silicone cured product excellent in strength and elongation of the cured product may be obtained.

Also, depending on the purpose of the present invention, a linear organohydrogenpolysiloxane other than the component (B-2) may be added. Specific examples thereof include a linear organohydrogenpolysiloxane having hydrogen atoms directly bonded to a silicon atom on the both ends only.

When the linear organohydrogenpolysiloxane other than the component (B-2) as the optional component is added, the amount ratio thereof to the alkenyl group in the composition is calculated, in addition to the blending amount of the components (B-1) and (B-2).

### <(C) flaky silver powder>

The component (C) is a flaky silver powder that is surface-treated with a branched organohydrogenpolysiloxane represented by the following general formula (3), wherein the branched organohydrogenpolysiloxane having two or more hydrogen atoms each directly bonded to a silicon atom in one molecule, being liquid at 25°C, and having a weight average molecular weight Mw of 1,500 to 6,000.

(HR³₂SiO_{1/2})ₐ(R³₃SiO_{1/2})_{b}(SiO_{4/2})_{c} (3)

In the formula, R³s are each independently an alkyl group having 1 to 12 carbon atoms; and 0<a<0.6, 0≤b<0.4, and 0<c<0.6, provided that a+b+c=1.

The branched organohydrogenpolysiloxane of the general formula (3) is used as a lubricant when a spherical reduced silver powder or an atomized silver powder as a raw material is mechanically pulverized with a ball mill or the like to obtain a flaky silver powder. Part of the branched organohydrogenpolysiloxane remains on the surface of the desired flaky silver powder. When the silver powder is pulverized into flakes, the addition amount of the branched organohydrogenpolysiloxane is preferably 1 to 200 mass%, and more preferably 10 to 100 mass% with respect to 100 mass% of the spherical silver powder as a raw material. A solvent may be added so as to allow the branched organohydrogenpolysiloxane of the general formula (3) to be dissolved to improve efficiency of contact thereof with the silver powder. Examples of the solvent include various alcohols.

In the general formula (3), specific examples of the alkyl group of R³ having 1 to 12 carbon atoms, particularly preferably 1 to 10 carbon atoms, include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group. As the alkyl group of R³, a methyl group, an ethyl group, a propyl group, an isopropyl group, and the like are preferred, and a methyl group is particularly preferred considering heat resistance under high temperature conditions of the silicone cured product produced from the obtained addition-curable silicone resin composition.

In the general formula (3), the content "a" of the HR³₂SiO_{1/2} unit is in the range of 0<a<0.6, and particularly preferably in the range of 0.2≤a≤0.5 with respect to a+b+c=1 as the total of the siloxane unit. The content "b" of the R³₃SiO_{1/2} unit is in the range of 0≤b<0.4, and particularly preferably in the range of 0≤b≤0.3 with respect to a+b+c=1 as the total of the siloxane unit. Further, the content "c" of the SiO_{4/2} unit is in the range of 0<c<0.6, and particularly preferably in the range of 0.45≤c≤0.55 with respect to a+b+c=1 as the total of the siloxane unit.

The weight average molecular weight of the branched organohydrogenpolysiloxane in the general formula (3) is in the range of 1,500 or more and 6,000 or less, and particularly preferably in the range of 2,500 or more and 5,000 or less. If the weight average molecular weight of the branched organohydrogenpolysiloxane is out of the above range, pulverizing into a flaky silver powder does not smoothly proceed.

The weight average molecular weight referred to in the present invention refers to a weight average molecular weight as measured by gel permeation chromatography (GPC) under the following condition with polystyrene as a standard substance.

### [Measurement condition]

Developing solvent: tetrahydrofuran (THF)
Flow rate: 0.6 mL/min
Detector: differential refractive index detector (RI)
Column: TSK Guardcolumn SuperH-L
TSKgel SuperH4000 (6.0 mmI.D. × 15 cm × 1)
TSKgel SuperH3000 (6.0 mmI.D. × 15 cm × 1)
TSKgel SuperH2000 (6.0 mmI.D. × 15 cm × 2)
(All of these are manufactured by Tosoh Corporation)
Column temperature: 40°C
Sample injection amount: 20 µL (THF solution having a
concentration of 0.5 mass%)

In the component (C), the viscosity of the branched organohydrogenpolysiloxane of the component (C) at 25°C as measured by a method described in JIS K 7117-1: 1999 is preferably 10 Pa·s or more and more preferably 200 to 1,500 Pa·s. When the branched organohydrogenpolysiloxane in the general formula (3) has the above viscosity, handleability at the time of pulverizing into a flaky silver powder is satisfactory. In the present invention, being liquid refers to having a fluidity such that viscosity measurement is possible at 25°C with a rotary viscometer, and particularly refers to having a viscosity of 10,000 Pa·s or less at 25°C.

Further, the branched organohydrogenpolysiloxane in the general formula (3) has two or more hydrosilyl groups in one molecule, and, further, the amount of the hydrosilyl group of the branched organohydrogenpolysiloxane is preferably 0.1 to 2 mol/100 g, and particularly preferably 0.2 to 0.9 mol/100 g. If the amount of the hydrosilyl group of the branched organohydrogenpolysiloxane is less than 2 in one molecule, pulverizing into a flaky silver powder does not smoothly proceed, and also lumps occur.

The branched organohydrogenpolysiloxane in the general formula (3) may be easily synthesized by mixing each compound as a unit source together in the content within the above range and performing synthesis by known methods. The branched organohydrogenpolysiloxane of the component (C) is preferably a cohydrolysis condensate of a HR³₂SiO_{1/2} unit source, a R³₃SiO_{1/2} unit source, and a SiO_{4/2} unit source, and the SiO_{4/2} unit source is preferably a partial hydrolysis condensate of tetraalkoxysilane. At the time of synthesis, if a partial hydrolysis condensate of tetramethoxysilane and/or tetraethoxysilane is used as the SiO_{4/2} unit source, a branched organohydrogenpolysiloxane having a large weight average molecular weight and a small content of a volatile hydrosilyl group-containing low molecular weight siloxane may be obtained.

When a partial hydrolysis condensate of tetramethoxysilane and/or tetraethoxysilane is used as the SiO_{4/2} unit source, the content of monomers of the tetramethoxysilane or the like contained in the partial hydrolysis condensate is preferably small. The content of the monomers is preferably 10 mass% or less, and particularly preferably 5 mass% or less. If the content of the monomers in the hydrolysis condensate is large, a large amount of the volatile hydrosilyl group-containing low molecular weight siloxane is contained in the branched organohydrogenpolysiloxane in the general formula (3), and, therefore, the stability of the silicone coating film present on the surface of the component (C) produced using it is deteriorated.

In the present invention, the average particle diameter (D50) refers to a median diameter on a volume basis measured by a laser diffraction method, and may be selected depending of the film thickness at the time of mounting for the use of the purpose. The average particle diameter (D50) of the flaky silver powder is preferably in the range of 0.1 to 20.0 µm, and more preferably in the range of 1.0 to 10.0 µm.

The blending amount of the component (C) is preferably in the range of 65 to 95 mass%, and more preferably in the range of 80 to 90 mass% with respect to 100 mass% of the whole addition-curable silicone resin composition. If the blending amount of the component (C) is within the above range, the cured product given by the addition-curable silicone resin composition exhibits high heat conductivity and electric conductivity while maintaining resin strength and elongation.

### <(D) addition-reaction catalyst>

An addition-reaction catalyst as the component (D) is blended so as to allow the addition curing reaction of the addition-curable silicone resin composition of the present invention to proceed. Examples of the catalyst include catalysts containing a platinum-group metal element such as platinum catalysts, palladium catalysts, and rhodium catalysts. Of these, platinum simple substance; platinum catalysts such as chloroplatinic acid, which are, for example, H₂PtCl₆·mH₂O, K₂PtCl₆, KHPtCl₆·mH₂O, K₂PtCl₄, K₂PtCl₄·mH₂O, and the like ("m" is a positive integer), and complexes of these and a hydrocarbon such as olefin, an alcohol, or an alkenyl group-containing organopolysiloxane; and the like are preferred from the viewpoint of the cost and the like. These may be each used alone, or two or more of these may be used in combination. Platinum complexes in which the ligand is separated by ultraviolet rays and activity is exhibited may also be used.

The blending amount of the addition-reaction catalyst is preferably in the range of 0.1 to 100 ppm, and more preferably in the range of 1 to 50 ppm in mass units of platinum-group metal with respect to 100 parts by mass of the whole addition-curable silicone resin composition. If the blending amount of the addition-reaction catalyst is within the above range, the storage property of the addition-curable silicone resin composition is satisfactory, and the addition curing reaction at the time of heating smoothly proceeds.

### <Additive>

The addition-curable silicone resin composition of the present invention may contain known additives such as curing inhibitors, adhesion-imparting agents, anti-settling agents, and the like.

### <Curing inhibitor>

A curing inhibitor may be blended in the addition-curable silicone resin composition of the present invention so as to, for example, adjust the curing speed. Examples of the curing inhibitor include compounds selected from the group consisting of: vinyl group-containing organopolysiloxanes such as tetramethyltetravinylcyclotetrasiloxane, hexavinyl disiloxane, and 1,3-divinyltetramethyldisiloxane; acetylene alcohols such as ethynylcyclohexanol and 3-methyl-1-butin-3-ol, and silane modified products and siloxane modified products thereof; hydroperoxide; tetramethylethylenediamine; benzotriazole; triallyl isocyanurate; alkyl maleates; and mixtures thereof. Of these, using ethynylcyclohexanol is particularly preferred considering decomposability at the time of curing and influence of remaining fragments on the heat resistance.

When the curing inhibitor is blended, the blending amount may be preferably 0.001 to 1.0 parts by mass, and particularly preferably 0.005 to 0.5 parts by mass with respect to 100 parts by mass of the whole addition-curable silicone resin composition.

### <Adhesion-imparting agent>

An adhesion-imparting agent may be blended in the addition-curable silicone resin composition of the present invention so as to enhance adhesion to a base material. Examples of the adhesion-imparting agent include alkoxysilane monomers such as 3-glycidoxypropyltrimethoxysilane, 3-glycidoxypropyltriethoxysilane, 2-(3,4-epoxycyclohexyl)ethyltrimethoxysilane, 3-methacryloxypropyltrimethoxysilane, and 3-methacryloxypropyltriethoxysilane; epoxy group-containing organopolysiloxanes such as a hydrolysis condensate of dimethyldiorganosilane and 3-glycidoxypropyltrimethoxysilane; isocyanurate skeleton-containing compounds such as tris(3-trimethoxysilylpropyl)isocyanurate; and acrylic compounds such as 5-ethyl-5-(hydroxymethyl)-β,β-dimethyl-1,3-dioxane-2-ethanol diacrylate (product name: KAYARAD R-604; manufactured by Nippon Kayaku Co., Ltd.).

When the adhesion-imparting agent is blended, the blending amount may be 0.01 to 5 mass% with respect to 100 mass% of the whole addition-curable silicone resin composition.

### <Anti-settling agent>

An anti-settling agent may be blended in the addition-curable silicone resin composition of the present invention so as to suppress separation of the filler from the resin component at the time of storage. Examples of the anti-settling agent include fumed silica and zinc oxide.

When the anti-settling agent is blended, the blending amount may be 0.01 to 5 mass% with respect to 100 mass% of the whole addition-curable silicone resin composition.

### EXAMPLE

The present invention will hereinafter be specifically described with reference to Production Examples, Examples, and Comparative Examples, but the present invention is not limited thereto.

"Parts" refers to "parts by mass", and "Me", "Vi", and "Ph" each represent a methyl group, a vinyl group, and a phenyl group, respectively.

The weight average molecular weight Mw refers to a weight average molecular weight measured by GPC measurement under the above-described condition.

In the following Examples, the amount of the hydrosilyl group indicates the molar amount of the hydrogen atom directly bonded to a silicon atom in the molecule, and the value thereof is obtained by ¹H-NMR measurement with a nuclear magnetic resonance (NMR) measurement apparatus manufactured by Bruker with dimethyl sulfoxide (DMSO) as an internal standard.

The amount of the SiVi group indicates the molar amount of the vinyl group directly bonded to a silicon atom in the molecule, and the value thereof is obtained by ¹H-NMR measurement with a nuclear magnetic resonance (NMR) measurement apparatus manufactured by Bruker with DMSO as an internal standard.

The value of the kinematic viscosity is obtained by measurement by a method using a Cannon-Fenske viscometer described in JIS Z 8803: 2011.

The value of the viscosity is obtained by measurement by a method using a rotary viscometer described in JIS K 7117-1: 1999.

The average particle diameter (D50) is a median diameter on a volume basis measured by a laser diffraction method.

### [Production Example 1]

A spherical reduced silver powder having an average particle diameter (D50) of 4.0 µm was immersed in a 1-butanol solution of an organohydrogenpolysiloxane represented by the following formula having a viscosity at 25°C of 1,200 Pa·s and a weight average molecular weight Mw as measured by GPC measurement of 3,700 in which the amount of the hydrosilyl group was 0.70 mol/100 g, and then pulverizing of the powder was performed with a ball mill.

(HMe₂SiO_{1/2})_{0.50}(SiO_{4/2})_{0.50}

Thereafter, a step of washing and drying was performed to obtain a flaky silver powder (c-1) having an average particle diameter (D50) of 5.8 µm. The section of the particle of the (c-1) was analyzed with STEM-EDX, and, as a result, a layer containing a Si element of 1 to 5 nm was detected on the surface of the particle. Further, the outermost surface of the particle of the (c-1) was analyzed with XPS, and, as a result, a Me₂SiO_{2/2} unit was detected. The Me₂SiO_{2/2} unit is formed by conversion of a HMe₂SiO_{1/2} unit thereto by chemical reaction on the surface of the silver particle, and, therefore, it was indicated that the particle was surface-treated by chemical bonding.

### [Production Example 2]

A spherical reduced silver powder having an average particle diameter (D50) of 4.0 µm was immersed in a 1-butanol solution of an organohydrogenpolysiloxane represented by the following formula having a viscosity at 25°C of 320 Pa·s and a weight average molecular weight Mw as measured by GPC measurement of 2,600 in which the amount of the hydrosilyl group was 0.40 mol/100 g, and then pulverizing of the powder was performed with a ball mill.

(HMe₂SiO_{1/2})_{0.25}(Me₃SiO_{1/2})_{0.25}(SiO_{4/2})_{0.50}

Thereafter, a step of washing and drying was performed to obtain a flaky silver powder (c-2) having an average particle diameter (D50) of 5.3 µm. The section of the particle of the (c-2) was analyzed with STEM-EDX, and, as a result, a layer containing a Si element in the range of 1 to 5 nm was detected on the surface of the particle. Further, the outermost surface of the particle of the (c-2) was analyzed with XPS, and, as a result, a Me₂SiO_{2/2} unit was detected. The Me₂SiO_{2/2} unit is formed by conversion of a HMe₂SiO_{1/2} unit thereto by chemical reaction on the surface of the silver particle, and, therefore, it was indicated that the particle was surface-treated by chemical bonding.

### [Comparative Production Example 1]

A spherical reduced silver powder having an average particle diameter (D50) of 4.0 µm was immersed in a 1-butanol solution of an organopolysiloxane having the siloxane unit composing the organopolysiloxane being represented by 100 mol% of a MeSiO_{3/2} unit, being solid at 25°C, and having a weight average molecular weight Mw as measured by GPC measurement of 3,600 in which the amount of the SiOH group was 0.20 mol/100 g (manufactured by Shin-Etsu Chemical Co., Ltd.; KR-220L), and then pulverizing of the powder was performed with a ball mill. Thereafter, a step of washing and drying was performed to obtain a spherical silver powder (c-3) having an average particle diameter (D50) of 4.2 µm. The section of the particle of the (c-3) was analyzed with STEM-EDX, and, as a result, no layer containing a Si element was detected on the surface of the particle.

### [Comparative Production Example 2]

A spherical reduced silver powder having an average particle diameter (D50) of 4.0 µm was immersed in a 1-butanol solution of an organopolysiloxane represented by the following formula being solid at 25°C and having a weight average molecular weight Mw as measured by GPC measurement of 4,400 in which the amount of the SiOH group was 0.10 mol/100 g, and then pulverizing of the powder was performed with a ball mill.

(Me₃SiO_{1/2})_{0.44}(SiO_{4/2})_{0.56}

Thereafter, a step of washing and drying was performed to obtain a spherical silver powder (c-4) having an average particle diameter (D50) of 4.1 µm. The section of the particle of the (c-4) was analyzed with STEM-EDX, and, as a result, no layer containing a Si element was detected on the surface of the particle.

### [Comparative Production Example 3]

A spherical reduced silver powder having an average particle diameter (D50) of 4.0 µm was immersed in a 1-butanol solution of an organohydrogenpolysiloxane represented by the following formula having a viscosity at 25°C of 25 mPa·s and having a weight average molecular weight Mw as measured by GPC measurement of 4,200 in which the amount of the hydrosilyl group was 1.55 mol/100 g, and then pulverizing of the powder was performed with a ball mill.

(Me₃SiO_{1/2})₂(HMeSiO_{2/2})₅₀

Thereafter, a step of washing and drying was performed to obtain an oval silver powder (c-5) containing a gel object having an average particle diameter (D50) of 5.1 µm. The section of the particle of the (c-5) was analyzed with STEM-EDX, and, as a result, layers each containing a Si element in the range of 1 to 100 nm were sparsely detected on the surface of the particle. Further, the outermost surface of the particle of the (c-5) was analyzed with XPS, and, as a result, a MeSiO_{3/2} unit was detected. The MeSiO_{3/2} unit is formed by conversion of a HMeSiO_{2/2} unit thereto by chemical reaction on the surface of the silver particle, and, therefore, it was indicated that the particle was surface-treated by chemical bonding.

### [Comparative Production Example 4]

A spherical reduced silver powder having an average particle diameter (D50) of 4.0 µm was immersed in a 1-butanol solution of an organohydrogenpolysiloxane represented by the following formula having a viscosity at 25°C of 2.6 Pa·s and having a weight average molecular weight Mw as measured by GPC measurement of 1,300 in which the amount of the hydrosilyl group was 1.00 mol/100 g, and then pulverizing of the powder was performed with a ball mill.

(HMe₂SiO_{1/2})_{0.66}(SiO_{4/2})_{0.34}

Thereafter, a step of washing and drying was performed to obtain an oval silver powder (c-6) having an average particle diameter (D50) of 5.0 µm. The section of the particle of the (c-6) was analyzed with STEM-EDX, and, as a result, layers each containing a Si element in the range of 1 to 2 nm were sparsely detected on the surface of the particle. Further, the outermost surface of the particle of the (c-6) was analyzed with XPS, and, as a result, a Me₂SiO_{2/2} unit was detected. The Me₂SiO_{2/2} unit is formed by conversion of a HMe₂SiO_{1/2} unit thereto by chemical reaction on the surface of the silver particle, and, therefore, it was indicated that the particle was surface-treated by chemical bonding.

### <Component (A)>

(a-1): a linear organopolysiloxane represented by the following formula in which the amount of the SiVi group is 0.015 mol/100 g and the kinematic viscosity at 25°C is 998 mm²/s.

   (ViMe₂SiO_{1/2})₂(Ph₂SiO_{2/2})₁₀(Me₂SiO_{2/2})₁₈₈
(a-2): a linear organopolysiloxane represented by the following formula in which the amount of the SiVi group is 0.013 mol/100 g and the kinematic viscosity at 25°C is 1,018 mm²/s.

   (ViMe₂SiO_{1/2})₂(Me₂SiO_{2/2})₂₀₀

### <Component (B-1)>

(b1-1): an organohydrogenpolysiloxane represented by the following formula in which the amount of the hydrosilyl group is 0.76 mol/100 g and the viscosity at 25°C is 6.6 mPa·s. 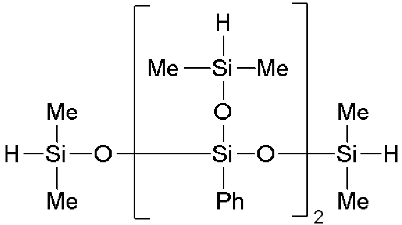
(b1-2): an organohydrogenpolysiloxane represented by the following formula in which the amount of the hydrosilyl group is 0.90 mol/100 g and the viscosity at 25°C is 2.0 mPa·s.

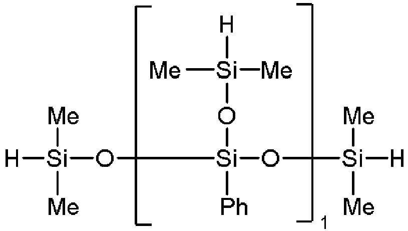

### <Component (B-2)>

(b2-1): an organohydrogenpolysiloxane represented by the following formula in which the amount of the hydrosilyl group is 1.14 mol/100 g and the viscosity at 25°C is 45.0 mPa·s.

   (Me₃SiO_{1/2})₂(HMeSiO_{2/2})₃₆(Me₂SiO_{2/2})₁₂
(b2-2): an organohydrogenpolysiloxane represented by the following formula in which the amount of the hydrosilyl group is 1.25 mol/100 g and the viscosity at 25°C is 4.5 mPa·s.

   (Me₃SiO_{1/2})₂(HMeSiO_{2/2})₈

### <Linear organohydrogenpolysiloxane other than component (B-2)>

(b3-1): an organohydrogenpolysiloxane represented by the following formula in which the amount of the hydrosilyl group is 0.10 mol/100 g and the viscosity at 25°C is 16.5 mPa·s.

(HMe₂SiO_{1/2})₂(Me₂SiO_{2/2})₁₈

### <Component (C)>

(c-1): a flaky silver powder having an average particle diameter (D50) of 5.8 µm prepared in the "Production Example 1".
(c-2): a flaky silver powder having an average particle diameter (D50) of 5.3 µm prepared in the "Production Example 2".
(c-3): a spherical silver powder having an average particle diameter (D50) of 4.2 µm prepared in the "Comparative Production Example 1".
(c-4): a spherical silver powder having an average particle diameter (D50) of 4.1 µm prepared in the "Comparative Production Example 2".
(c-5): an oval silver powder containing a gel object having an average particle diameter (D50) of 5.1 µm prepared in the "Comparative Production Example 3".
(c-6): an oval silver powder having an average particle diameter (D50) of 5.0 µm prepared in the "Comparative Production Example 4".
(c-7): a spherical atomized silver powder having an average particle diameter (D50) of 5.0 µm (manufactured by TOKURIKI HONTEN CO., LTD.; AGF-5S).
(c-8): a flaky silver powder that is surface-treated with fatty acid in which a layer containing a C element derived from fatty acid in the range of 1 to 5 nm is detected on the surface of the particle when the section of the particle is analyzed with STEM-EDX having an average particle diameter (D50) of 4.0 µm (manufactured by TOKURIKI HONTEN CO., LTD.; Silbest TC-466) .

### <Component (D)>

(d-1): a 1,3-divinyltetramethyldisiloxane solution of a 1,3-divinyltetramethyldisiloxane solution of platinum (0) in which the content of platinum is 2 mass% and the amount of the SiVi group is 1.05 mol/100 g.

### <(E) curing inhibitor>

(e-1): ethynylcyclohexanol

Respective components described above were blended together in accordance with the composition (parts by mass) described in Tables 1 and 2 to prepare an addition-curable silicone resin composition for each of Examples 1 to 6 and Comparative Examples 1 to 8. Each of the obtained addition-curable silicone resin compositions was evaluated as described below. The results are shown in Tables 1 and 2.

### (1) Uniformity

Each addition-curable silicone resin composition was sieved with a 150-mesh sieve. The composition was evaluated as "good" if no aggregated object was present on the mesh, and was evaluated as "poor" if an aggregated object was observed on the mesh.

### (2) Viscosity

The viscosity of the addition-curable silicone resin composition was measured based on the description in JIS K-7177.
· Used viscometer: "TVE-35 type" manufactured by Toki Sangyo Co., Ltd.
· Used cone: 3° × R9.7
· Rotation speed: 10 rpm
· Measurement temperature: 23.0°C

### (3) Exothermic peak temperature

The exothermic peak temperature of the addition-curable silicone resin composition was measured with a differential scanning calorimeter (DSC).
· Used apparatus: "DSC7020" manufactured by Hitachi High-Tech Corporation
· Measurement starting temperature: 25°C
· Temperature increase speed: 10°C/min
· Measurement ending temperature: 300°C
· Measurement atmosphere: nitrogen atmosphere

### (4) Hardness (durometer; type A), and tensile strength and elongation at break

A 2-mm-thick silicone cured product sheet was produced by heating the addition-curable silicone resin composition at 125°C for 1 hour using a hot air circulation drier. The silicone cured product sheet was measured for the hardness (durometer; type A) based on the description in JIS K6253-3: 2012, and for tensile strength and elongation at break based on the description in JIS K6251: 2017.

### (5) Volume resistance

A 1-mm-thick silicone cured product sheet was produced by heating the addition-curable silicone resin composition at 125°C for 1 hour using a hot air circulation drier. The volume resistance of the silicone cured product sheet in a four-terminal method was measured.

### (6) Heat conductivity

A 2-mm-thick silicone cured product sheet was produced by heating the addition-curable silicone resin composition at 125°C for 1 hour using a hot air circulation drier. The heat conductivity of the silicone cured product sheet was measured by a laser flash method (used apparatus: "LFA467HyperFlash" manufactured by NETZSCH Japan **K.K.).**

**[Table 1]**

| | | Example 1 | Example 2 | Example 3 | Example 4 | Example 5 | Example 6 |
|---|---|---|---|---|---|---|---|
| (A) | (a-1) | 9.52 | 9.52 | 9.55 | 9.53 | | 9.43 |
| | (a-2) | | | | | 9.55 | |
| (B-1) | (b1-1) | 0.25 | 0.25 | | 0.25 | 0.24 | 0.24 |
| | (b1-2) | | | 0.22 | | | |
| (B-2) | (b2-1) | 0.15 | 0.15 | 0.15 | | 0.13 | 0.15 |
| | (b2-2) | | | | 0.14 | | |
| | (b3-1) | | | | | | 0.10 |
| (C) | (c-1) | 90.00 | | 90.00 | 90.00 | 90.00 | 90.00 |
| | (c-2) | | 90.00 | | | | |
| | (c-3) | | | | | | |
| | (c-4) | | | | | | |
| | (c-5) | | | | | | |
| | (c-6) | | | | | | |
| | (c-7) | | | | | | |
| | (c-8) | | | | | | |
| (D) | (d-1) | 0.05 | 0.05 | 0.05 | 0.05 | 0.05 | 0.05 |
| (E) | (e-1) | 0.03 | 0.03 | 0.03 | 0.03 | 0.03 | 0.03 |
| Platinum amount (ppm) | | 10 | 10 | 10 | 10 | 10 | 10 |
| SiH/SiVi | | 1.50 | 1.48 | 1.51 | 1.50 | 1.47 | 1.50 |
| Uniformity | | good | good | good | good | good | good |
| Viscosity (Pa·s) | | 30 | 28 | 27 | 28 | 29 | 31 |
| Exothermic peak temperature (°C) | | 95 | 94 | 93 | 94 | 95 | 91 |
| Hardness (type A) | | 90 | 91 | 85 | 86 | 87 | 85 |
| Tensile strength (MPa) | | 5.0 | 5.2 | 5.3 | 4.8 | 5.3 | 4.4 |
| Elongation at break (%) | | 40 | 40 | 50 | 50 | 45 | 55 |
| Volume resistance (Ω·cm) | | 3 x 10⁻⁵ | 3 x 10⁻⁵ | 3 x 10⁻⁵ | 3 x 10⁻⁵ | 3 x 10⁻⁵ | 3 x 10⁻⁵ |
| Heat conductivity (W/m·K) | | 10.3 | 10.2 | 9.8 | 9.9 | 9.7 | 9.8 |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| (A) | (a-1) | 9.52 | 9.52 | 9.52 | 9.52 | 9.52 | 9.52 | 9.60 | 9.47 |
| | (a-2) | | | | | | | | |
| (B-1) | (b1-1) | 0.25 | 0.25 | 0.25 | 0.25 | 0.25 | 0.25 | | 0.45 |
| | (b1-2) | | | | | | | | |
| (B-2) | (b2-1) | 0.15 | 0.15 | 0.15 | 0.15 | 0.15 | 0.15 | 0.32 | |
| | (b2-2) | | | | | | | | |
| | (b3-1) | | | | | | | | |
| (C) | (c-1) | | | | | | | 90.00 | 90.00 |
| | (c-2) | | | | | | | | |
| | (c-3) | 90.00 | | | | | | | |
| | (c-4) | | 90.00 | | | | | | |
| | (c-5) | | | 90.00 | | | | | |
| | (c-6) | | | | 90.00 | | | | |
| | (c-7) | | | | | 90.00 | | | |
| | (c-8) | | | | | | 90.00 | | |
| (D) | (d-1) | 0.05 | 0.05 | 0.05 | 0.05 | 0.05 | 0.05 | 0.05 | 0.05 |
| (E) | (e-1) | 0.03 | 0.03 | 0.03 | 0.03 | 0.03 | 0.03 | 0.03 | 0.03 |
| Platinum amount (ppm) | | 10 | 10 | 10 | 10 | 10 | 10 | 10 | 10 |
| SiH/SiVi | | 1.50 | 1.50 | 1.50 | 1.50 | 1.50 | 1.50 | 1.49 | 1.41 |
| Uniformity | | poor | poor | good | good | poor | good | good | good |
| Viscosity (Pa·s) | | 52 | 53 | 26 | 35 | 51 | 46 | 27 | 28 |
| Exothermic peak temperature (°C) | | 96 | 96 | 95 | 95 | 96 | 115 | 101 | 77 |
| Hardness (type A) | | 85 | 85 | 88 | 89 | 85 | 67 | 92 | 78 |
| Tensile strength (MPa) | | 2.1 | 1.9 | 3.5 | 2.7 | 2.2 | 1.3 | 3.7 | 1.5 |
| Elongation at break (%) | | 10 | 10 | 30 | 15 | 10 | 5 | 15 | 60 |
| Volume resistance (Ω·cm) | | 6 x 10⁻⁵ | 6 x 10⁻⁵ | 4 x 10⁰ | 4 x 10⁻⁵ | 5 x 10⁻⁵ | 5 x 10⁻⁵ | 3 x 10⁻⁵ | 5 x 10⁻⁵ |
| Heat conductivity (W/m·K) | | 5.3 | 5.2 | 2.1 | 6.6 | 5.5 | 6.3 | 10.2 | 8.8 |

As a result of the above evaluation test, it was found that the addition-curable silicone resin compositions of the present invention (Examples 1 to 6) were each excellent in curability, resin strength, and elongation, and had both heat conductivity and electric conductivity.

On the other hand, the addition-curable silicone resin compositions of Comparative Examples 1 and 2 were each poor in uniformity and poor in mechanical strength and heat conductivity of the cured product. It was indicated that the silver powder (c-3) used in Comparative Example 1 and the silver powder (c-4) used in Comparative Example 2 were in the almost bare state from the fact that the properties of the addition-curable silicone resin compositions of Comparative Examples 1 and 2 were very similar to those of the addition-curable silicone resin composition of Comparative Example 5 using an atomized silver powder (c-7).

Also, in Comparative Example 3, it was indicated that the silicone film present on the surface of the silver powder (c-5) was thick enough to prevent the silver particles from being brought into contact with each other from the fact that the addition-curable silicone resin composition of Comparative Example 3 was significantly poor in heat conductivity and electric conductivity of the cured product.

The addition-curable silicone resin composition of Comparative Example 4 was poor in mechanical strength and heat conductivity of the cured product, and it was found that the silicone film on the surface of the silver powder (c-6) was insufficient in the thickness from the viewpoint of compatibility of the silicone film with the silicone resin.

Further, the addition-curable silicone resin composition of Comparative Example 6 was poor in curability due to the influence of the silver powder (c-8) containing fatty acid, and was poor in mechanical strength and heat conductivity of the cured product.

The addition-curable silicone resin compositions of Comparative Examples 7 and 8 did not contain the component (B-1) or component (B-2), respectively, and were found to be poor in one of tensile strength and elongation of the cured product.

Therefore, it was confirmed that the addition-curable silicone resin composition of the present invention was very useful because the composition was excellent in curability, resin strength, and elongation, and had both heat conductivity and electric conductivity.

The present description includes the following embodiments.
[1]: An addition-curable silicone resin composition comprising:
   (A) a linear organopolysiloxane having two or more alkenyl groups each having 2 to 8 carbon atoms in one molecule;
   (B-1) a branched organohydrogenpolysiloxane represented by the following general formula (1): 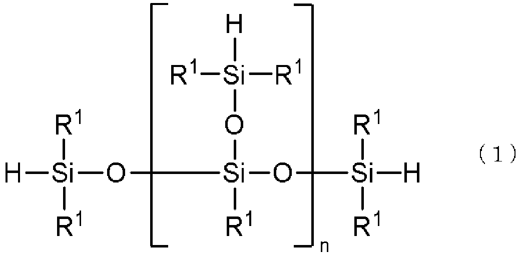 wherein R¹s are each independently an alkyl group having 1 to 12 carbon atoms or an aryl group having 6 to 12 carbon atoms; and "n" is 1 or 2;
   (B-2) a linear organohydrogenpolysiloxane represented by the following general formula (2): 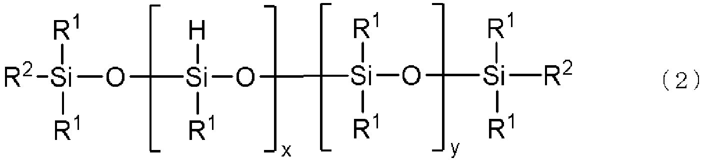 wherein R¹s are each as defined above; R²s are each independently a hydrogen atom, an alkyl group having 1 to 12 carbon atoms, or an aryl group having 6 to 12 carbon atoms; 0<x; and 0≤y;
   (C) a flaky silver powder that is surface-treated with a branched organohydrogenpolysiloxane represented by the following general formula (3), wherein the branched organohydrogenpolysiloxane having two or more hydrogen atoms each directly bonded to a silicon atom in one molecule, being liquid at 25°C, and having a weight average molecular weight Mw of 1,500 to 6,000:

      (HR³₂SiO_{1/2})ₐ(R³₃SiO_{1/2})_{b}(SiO_{4/2})_{c} ... (3)

      wherein R³s are each independently an alkyl group having 1 to 12 carbon atoms; and 0<a<0.6, 0≤b<0.4, and 0<c<0.6, provided that a+b+c=1; and
   (D) an addition-reaction catalyst.
[2]: The addition-curable silicone resin composition according to the above [1], wherein the linear organopolysiloxane as the component (A) is an alkenyl group-containing linear organopolysiloxane represented by the following general formula (4): 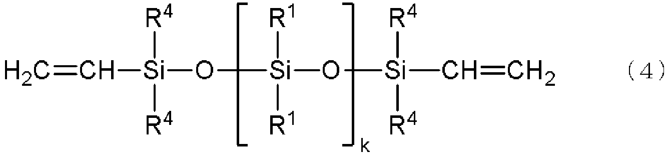 wherein R⁴s are each independently an alkenyl group having 2 to 8 carbon atoms or an alkyl group having 1 to 12 carbon atoms; R¹s are each as defined above; a methyl group accounts for 80 mol% or more in total R¹s; and "k" is an integer satisfying k>0, and is a number which allows a kinematic viscosity of the linear organopolysiloxane at 25°C as measured by a method described in JIS Z 8803:2011 to be 10 to 1,000,000 mm²/s.
[3]: The addition-curable silicone resin composition according to the above [1] or [2], wherein, in the component (C), a viscosity of the branched organohydrogenpolysiloxane of the component (C) at 25°C as measured by a method described in JIS K 7117-1:1999 is 10 Pa·s or more.
[4]: The addition-curable silicone resin composition according to any one of the above [1] to [3], wherein the branched organohydrogenpolysiloxane of the component (C) is a cohydrolysis condensate of a HR³₂SiO_{1/2} unit source, a R³₃SiO_{1/2} unit source, and a SiO_{4/2} unit source, and wherein the SiO_{4/2} unit source is a partial hydrolysis condensate of tetraalkoxysilane.

The present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An addition-curable silicone resin composition comprising:
(A) a linear organopolysiloxane having two or more alkenyl groups each having 2 to 8 carbon atoms in one molecule;
(B-1) a branched organohydrogenpolysiloxane represented by the following general formula (1): 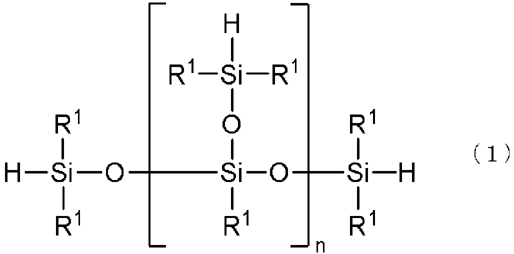 wherein R¹s are each independently an alkyl group having 1 to 12 carbon atoms or an aryl group having 6 to 12 carbon atoms; and "n" is 1 or 2;
(B-2) a linear organohydrogenpolysiloxane represented by the following general formula (2): 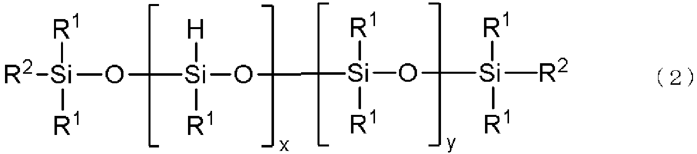 wherein R¹s are each as defined above; R²s are each independently a hydrogen atom, an alkyl group having 1 to 12 carbon atoms, or an aryl group having 6 to 12 carbon atoms; 0<x; and 0≤y;
(C) a flaky silver powder that is surface-treated with a branched organohydrogenpolysiloxane represented by the following general formula (3), wherein the branched organohydrogenpolysiloxane having two or more hydrogen atoms each directly bonded to a silicon atom in one molecule, being liquid at 25°C, and having a weight average molecular weight Mw of 1,500 to 6,000:
(HR³₂SiO_{1/2})ₐ(R³₃SiO_{1/2})_{b}(SiO_{4/2})_{c} ... (3)
wherein R³s are each independently an alkyl group having 1 to 12 carbon atoms; and 0<a<0.6, 0≤b<0.4, and 0<c<0.6, provided that a+b+c=1; and
(D) an addition-reaction catalyst.

2. The addition-curable silicone resin composition according to claim 1, wherein the linear organopolysiloxane as the component (A) is an alkenyl group-containing linear organopolysiloxane represented by the following general formula (4): 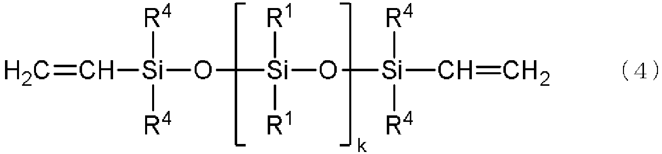 wherein R⁴s are each independently an alkenyl group having 2 to 8 carbon atoms or an alkyl group having 1 to 12 carbon atoms; R¹s are each as defined above; a methyl group accounts for 80 mol% or more in total R¹s; and "k" is an integer satisfying k>0, and is a number which allows a kinematic viscosity of the linear organopolysiloxane at 25°C as measured by a method described in JIS Z 8803:2011 to be 10 to 1,000,000 mm²/s.

3. The addition-curable silicone resin composition according to claim 1 or 2, wherein, in the component (C), a viscosity of the branched organohydrogenpolysiloxane of the component (C) at 25°C as measured by a method described in JIS K 7117-1:1999 is 10 Pa·s or more.

4. The addition-curable silicone resin composition according to any one of claims 1 to 3, wherein the branched organohydrogenpolysiloxane of the component (C) is a cohydrolysis condensate of a HR³₂SiO_{1/2} unit source, a R³₃SiO_{1/2} unit source, and a SiO_{4/2} unit source, and wherein the SiO_{4/2} unit source is a partial hydrolysis condensate of tetraalkoxysilane.
